# EUROPÄISCHE PATENTANMELDUNG

(11) **EP 1 061 342 A2**
(43) Veröffentlichungstag der Anmeldung: **20.12.2000**
(21) Anmeldenummer: 00112462.7
(22) Anmeldetag: 10.06.2000
(51) Int. Cl.: G01D 5/246

(54) **Positionssensor für ein Kraftfahrzeug**

(30) Priorität: 15.06.1999 DE 19927146
(71) Anmelder: Hella KG Hueck & Co., 59552 Lippstadt (DE)
(72) Erfinder: Irle, Henning, 59557 Lippstadt (DE); Schmidt, Franz-Josef, 33154 Salzkotten (DE); Kost, Norbert, 59590 Geseke (DE)

(57) **Zusammenfassung**

Beschrieben wird ein Positionssensor für ein Kraftfahrzeug, welcher als Sensorsignal ein positionsabhängig variierendes pulsweitenmoduliertes Signal erzeugt, bei dem der Gesamtmeßbereich des Positionssensor in mehrere gleichartige, aufeinanderfolgende Meßbereiche unterteilt ist. Der erfindungsgemäße Positionssensor ermöglicht eine Verlagerung des Sensorabgleiches in den (oder gegebenenfalls in die) Empfänger, um kostengünstig einen Abgleich im oder am Positionssensor zu ersetzen, ohne daß hierbei das Auflösungsvermögen des Positionssensors beeinträchtigt wird.

## Beschreibung

Die Erfindung betrifft einen Positionssensor für ein Kraftfahrzeug, welcher als Sensorsignal ein positionsabhängig variierendes pulsweitenmoduliertes Signal erzeugt.

Bei Positionssensoren ist es üblich, diese in der Produktion oder nach dem Einbau zu justieren. Insbesondere eine heute noch übliche mechanische Justage ist für den Fahrzeughersteller sehr aufwendig. Deshalb wird die Forderung nach einem elektrischen Abgleich im Fahrzeug gestellt. Der Abgleich soll dabei innerhalb des Empfängers des Sensorsignales vorgenommen und z.B. über eine vorhandene Diagnoseschnittstelle initiiert werden.

Ein solcher Abgleich ist dabei jedoch allgemein mit einer Reduzierung des ursprünglich zur Verfügung stehenden Signalbereiches verbunden, was zu einer Reduzierung der Auflösung führt. Dies ist aber nicht erwünscht.

Die Aufgabenstellung war, einen Positionssensor zu schaffen, welcher eine Verlagerung des Sensorabgleiches in den (oder gegebenenfalls in die) Empfänger ermöglicht, um kostengünstig einen Abgleich im oder am Positionssensor zu ersetzen, ohne daß hierbei das Auflösungsvermögen des Positionssensors beeinträchtigt wird.

Diese Aufgabe wird erfindungsgemäß durch die kennzeichnenden Merkmale des Anspruches 1 gelöst.

Um keinerlei Einbußen bei der Auflösung zu haben und um einen sehr großen Einstellbereich (von z.B. bis zu 360°) zu ermöglichen, erzeugt der Positionssensor über dem mechanischen Betätigungsweg ein sich periodisch wiederholendes Meßsignal. Zum Beispiel: bei einem Drehwinkel von 360° ein sich alle 90° wiederholendes Signal. Dieses Meßsignal ist ein pulsweitenmoduliertes Signal (PWM-Signal). Die Kurvenform des PWM-Meßwertes über 360° würde bei dem obigen Beispiel dann 4 Perioden Sägezahn entsprechen, wobei der Übergang bei Über- oder Unterlauf eines Bereiches sprungförmig nahtlos erfolgt.

Für eine saubere PWM-Übertragung darf der PWM-Wert nicht von 0 bis 100% moduliert werden. Dies ist leicht einzusehen, weil ein Wert von 0 % oder 100% von einem Gleichspannungspegel nicht zu unterscheiden wäre. Üblich sind Bereiche von z.B. 10% bis 90%.

Um dennoch einen unterbrechungsfreien Wechsel von einem Meßbereich in den nächsten zu ermöglichen, wird zu dem eigentlichen Meßwert vor der PWM-Umwandlung ein entsprechender fester Offsetwert addiert, so daß beispielsweise bei einem Meßwert von 0% der PWM-Wert dem Minimalwert (= Offsetwert von z.B. 12,5%) entspricht. Darüber hinaus wird der maximal möglich PWM-Wert bestimmt, indem Offsetwert + maximaler Meßwert z.B. nur 87,5% des möglichen PWM-Wertes erreichen.

Im Empfänger wird das PWM-Verhältnis bestimmt und ausgewertet. Insbesondere wird dabei der Offsetwert von 1/8 = 12,5% wieder subtrahiert. Damit liegt das Ergebnis wieder in bereinigter Form in dem ursprünglichen Wertebereich vor. Störimpulse, die kürzer sind als 12,5% PWM können eindeutig erkannt und ausgefiltert werden.

Der Sensor weist somit über den gesamten Signalbereich mehrere sich wiederholende Meßbereiche ohne Lücken auf, wobei ein fehlerfreier Übergang von einem Meßbereich zum nächsten gewährleistet ist.

Bei dem erfindungsgemäßen Positionssensor ist es nun möglich, den tatsächlich genutzten Meßbereich erst in der Applikation nach dem Einbau ins Fahrzeug festzulegen. Ein Abgleich im Positionssensor kann entfallen. Der Abgleich des Meßbereichs wird im Empfänger vorgenommen und beispielsweise über die Diagnosesschnittstelle eingeleitet. Hierzu wird unter vorgegebenen Standardbedingungen zum aktuellen Meßwert ein weiterer Offsetwert addiert und als Referenzwert im EEPROM abgelegt.

Hierbei kann die tatsächliche Stellung des Rotors des Winkelsensors über die möglichen 360° Drehbereich beliebig sein, wenn der Sensor selbst keinen mechanischen Anschlag hat. Vom Abgleichpunkt ist dann ein festzulegender Bereich von zum Beispiel +/- 50% (oder auch -20 bis +80%) des gewählten Meßbereiches eindeutig. Im normalen Betrieb muß das Signal beim Einschalten der Versorgungsspannung in diesem festgelegten eindeutigen Bereich sein, damit keine Fehler auftreten. Während des normalen Betriebes auftretende große dynamische Hübe brauchen nicht begrenzt zu werden. Sie können problemlos inkremental durch korrektes Verarbeiten der Meßbereichsüber- oder -unterläufe mit gemessen werden.

Verzögerungszeiten auf dem Signalpfad (z.B. durch HF-Filter) werden mit abgeglichen und liefern keinen Fehler, solange sie nach dem Abgleich stabil bleiben.

Eine Fehlererkennung ist möglich, wenn z. B. mehr als ein Über- oder Unterlauf auftreten oder ein vorgegebener Überhub überschritten wurde. In diesem Fall wird der 2. Über- oder Unterlauf nicht mitgezählt, so daß der richtige Bereich automatisch wiedergefunden wird.

Der beschriebene Aufbau und die Funktionsweise eines erfindungsgemäßen Sensors ist besonders für Positionssensoren, also Weg- und Winkelsensoren vorteilhaft, da von diesen, insbesondere bei speziellen sicherheitskritischen Anwendungen in Kraftfahrzeugen, sehr hohe Auflösungen und Genauigkeiten gefordert werden. Selbstverständlich können aber auch Sensoren für andere Anwendungen gemäß dem erfindungsgemäßen Aufbau hergestellt werden.

## Patentansprüche

1. Positionssensor für ein Kraftfahrzeug,
welcher als Sensorsignal ein positionsabhängig variierendes pulsweitenmoduliertes Signal erzeugt,
**dadurch gekennzeichnet**,
- daß der Gesamtmeßbereich des Positionssensor in mehrere gleichartige, aufeinanderfolgende Meßbereiche unterteilt ist,
- daß der Positionssensor zu seinem digitalisierten Meßwert einen festen Offsetwert addiert, wobei die Summe aus dem minimal möglichen Meßwert und dem Offsetwert einem pulsweitenmodulierten Signal mit einem minimalen Modulationsgrad, der größer ist als 0%, entspricht und die Summe aus dem maximal möglichen Meßwert und dem Offsetwert einem pulsweitenmodulierten Signal mit einem maximalen Modulationsgrad, der kleiner ist als 100%, entspricht,
- und daß in einem nichtflüchtigem Speicher des Empfängers ein unter Standardbedingungen ermittelter Sensormeßwert als weiterer Offsetwert abgelegt ist.

2. Positionssensor nach Anspruch 1, dadurch gekennzeichnet, daß der Empfänger des pulsweitenmodulierten Signals von dem aus dem demodulierten Signal erhaltenen Meßwert den Offsetwert subtrahiert.

3. Positionssensor nach Anspruch 1, dadurch gekennzeichnet, daß der Empfänger eine Diagnoseschnittstelle aufweist und daß der Empfänger bei Anliegen eines vorgegebenen Signals an der Diagnoseschnittstelle den weiteren Offsetwert in seinen nichfflüchtigem Speicher einschreibt.
